# EUROPEAN PATENT APPLICATION

(11) **EP 3 205 983 A1**
(43) Date of publication of application: **16.08.2017**
(21) Application number: 17155511.3
(22) Date of filing: 09.02.2017
(51) Int. Cl.: G01D 3/036, G01D 5/244

(54) **DISPLACEMENT DETECTION DEVICE**

(30) Priority: 10.02.2016 JP 2016023506
(71) Applicant: Melexis Technologies SA, 2022 Bevaix (CH)
(72) Inventor: YOSHIYA, Takumi, Shibuya-ku, Tokyo 151-0051 (JP)
(74) Representative: DenK iP

(57) **Abstract**

A displacement detection device (7) includes a magnetic detection element (1) that outputs a signal according to a detected magnetic flux density and detects a magnetic flux density that varies according to displacement of a magnetic member (2); and a signal processor (14) that processes a signal output from the magnetic detection element (1) using a predetermined calculation method and calculates an output value proportional to the displacement of the magnet (2), the signal processor (14) correcting the output value by using a correction value determined based on a relationship between the relative position between the magnetic member (2) and the magnetic detection element (1) and temperature. The displacement detection device (7) corrects an output value even when the relative position between the magnetic member (2) and the magnetic detection element (1) is changed dependent on temperature.

## Description

### Field of the invention

The present invention relates to a displacement detection device.

### Background of the invention

As a conventional technology, a displacement detection device that detects displacement of a cushion spring supporting a cushion pad of a seat by correcting a detection error due to temperature dependency of the cushion pad has been proposed (for example, see JP 2005-233672 A).

The displacement detection device disclosed in JP 2005-233672 A includes: a magnetic generation member that rotates in conjunction with vertical displacement of the cushion spring of the seat; a yoke which is disposed in a magnetic field of the magnetic generation member such that, when a relative angle to the magnetic generation member is changed, a magnetic flux density is changed, the yoke being provided with a pair of gaps; and a Hall IC that is disposed on one of the gaps for detecting a magnetic flux density, wherein the Hall IC has a temperature correction unit that corrects a detection error, caused by temperature dependency, in vertical displacement of the cushion spring. The cushion pad disposed on the cushion spring has temperature dependency such that, when the temperature is high, it is softened, and when the temperature is low, it is hardened. Therefore, when the temperature is high, the cushion pad is easy to be deformed, so that the amount of displacement of the cushion spring is increased, and when the temperature is low, the cushion pad is difficult to be deformed, so that the amount of displacement of the cushion spring is decreased. The temperature dependency described above is corrected according to the temperature measured by the temperature correction unit.

However, while the displacement detection device disclosed in JP 2005-233672 A corrects a detection error according to the temperature dependency of the cushion pad of the seat, it does not consider the temperature dependency of a case of a magnetic sensor including the magnetic generation member, the yoke, and the cushion spring. Specifically, the magnetic generation member, the yoke, and the cushion spring are also deformed depending on temperature. In addition, the Hall element is provided in the magnetic sensor which is sealed by resin to be formed into a case. When the case is deformed depending on temperature, the position where the Hall element is disposed is changed, and further, the relative position (offset) between the magnetic generation member and the Hall element is changed. The displacement detection device disclosed in JP 2005-233672 A does not consider the temperature dependency of components other than the cushion pad, and thus entails a problem such that the displacement of the relative position between the magnetic generation member and the Hall element caused by the temperature dependency cannot be corrected.

### Summary of the invention

Accordingly, an object of the present invention is to provide a displacement detection device that corrects an output value even when the relative position between a magnetic member and a Hall element is changed due to temperature dependency.

The above objective is accomplished by a device according to the present invention

In a first aspect, embodiments of the present invention provide a displacement detection device comprising a magnetic detection element that outputs a signal according to a detected magnetic flux density and detects a magnetic flux density that varies according to displacement of a magnetic member; and a signal processor that processes a signal output from the magnetic detection element using a predetermined calculation method and calculates an output value proportional to the displacement of the magnetic member. The signal processor corrects the output value by using a correction value determined based on a relationship between the relative position between the magnetic member and the magnetic detection element and temperature.

In a second aspect, embodiments of the present invention provide a displacement detection device comprising a magnetic detection element that outputs a signal according to a detected magnetic flux density and detects a magnetic flux density that varies according to displacement of a magnetic member; a signal processor that processes a signal output from the magnetic detection element using a predetermined calculation method and calculates an output value proportional to the displacement of the magnetic member; and an output unit that outputs an output signal by correcting the output value by using a correction value determined based on a relationship between the relative position between the magnetic member and the magnetic detection element and temperature.

It is an advantage of a displacement detection device according to embodiments of the first or second aspect of the present invention, that an output value can be corrected even when the relative position between a magnetic member and a Hall element is changed due to temperature dependency.

In a displacement detection device according to the first or second aspect, the signal processor may use, for the predetermined calculation method, a ratio between a signal output from the magnetic detection element with respect to one detection direction and a signal output from the magnetic detection element with respect to the other detection direction. This way, the temperature dependency of a signal output from the magnetic detection element with respect to one detection element and the temperature dependency of a signal output from the magnetic detection element with respect to the other detection direction can be offset.

Particular and preferred aspects of the invention are set out in the accompanying independent and dependent claims. Features from the dependent claims may be combined with features of the independent claims and with features of other dependent claims as appropriate and not merely as explicitly set out in the claims.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, in which:
Figs. 1(a) and 1(b) are a perspective view and a side view, respectively, illustrating an example of a configuration of a displacement detection device according to an embodiment of the present invention.
Figs. 2(a) and 2(b) are a perspective view and a sectional view, respectively, illustrating the configuration of a magnetic sensor which may be used in embodiments of the present invention.
Fig. 3 is a block diagram illustrating one example of the configuration of the magnetic sensor which may be used in embodiments of the present invention.
Fig. 4 is a schematic diagram for describing an operation of the magnetic sensor in the displacement detection device.
Figs. 5(a) to 5(c) are schematic diagrams for describing an operation of the displacement detection device according to embodiments of the present invention.
Figs. 6(a) and 6(b) are a graph showing the relationship between displacement of a magnet and a magnetic flux detected by the magnetic sensor, and a graph showing the relationship between displacement of the magnet and an output from the magnetic sensor.
Fig. 7 is a graph showing the relationship between a voltage converted by a DSP in the magnetic sensor and an angle.
Fig. 8 is a graph showing the relationship between a correction value and temperature.
Fig. 9 is a graph showing the relationship between a voltage converted by the DSP in the magnetic sensor and an angle.
Fig. 10 is a graph showing the relationship between a voltage converted by an output unit in the magnetic sensor and an angle.

The drawings are only schematic and are non-limiting. In the drawings, the size of some of the elements may be exaggerated and not drawn on scale for illustrative purposes. The dimensions and the relative dimensions do not necessarily correspond to actual reductions to practice of the invention.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, directional terminology such as top, bottom, front, back, leading, trailing, under, over and the like in the description and the claims is used for descriptive purposes with reference to the orientation of the drawings being described, and not necessarily for describing relative positions. Because components of embodiments of the present invention can be positioned in a number of different orientations, the directional terminology is used for purposes of illustration only, and is in no way intended to be limiting, unless otherwise indicated. It is, hence, to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being re-defined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

### Configuration of displacement detection device according to embodiments of the present invention

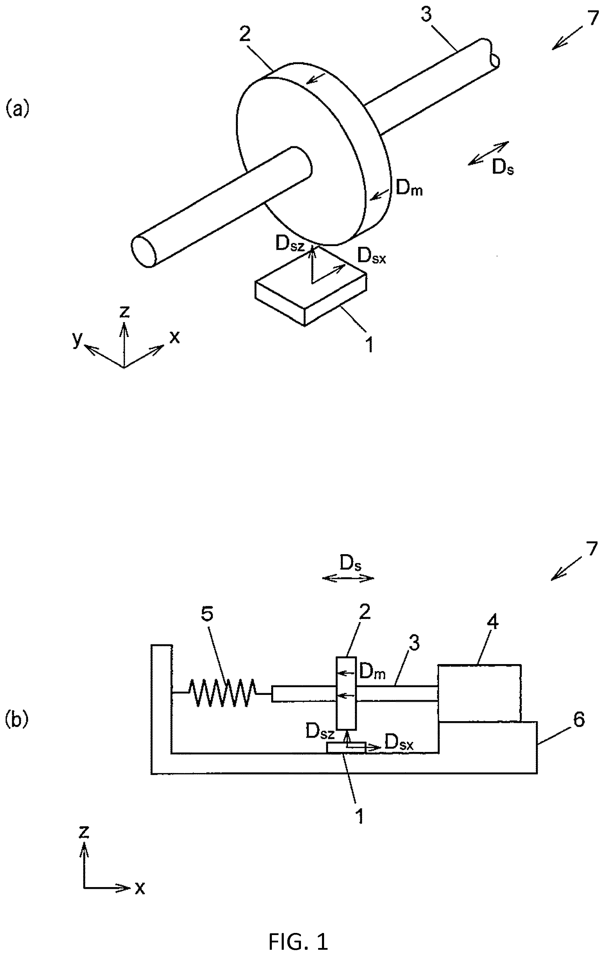

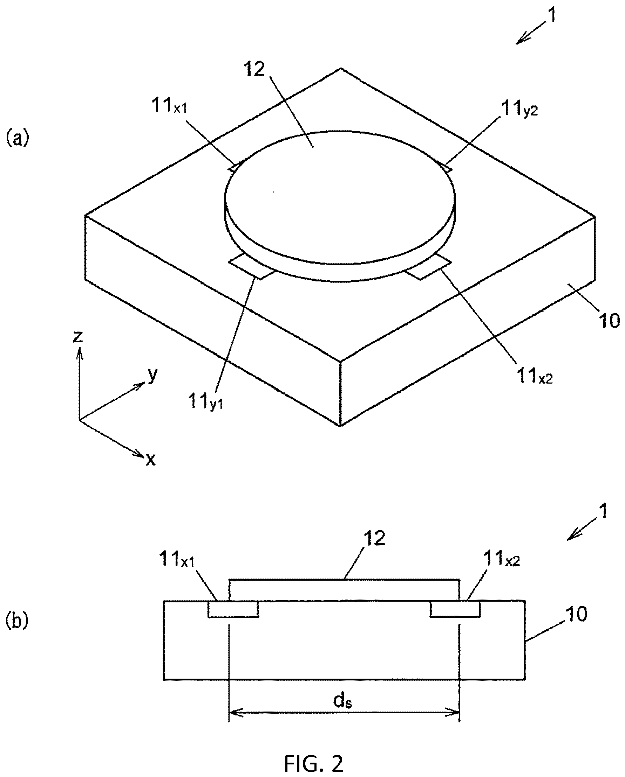

Figs. 1(a) and 1(b) are a perspective view and a side view, respectively, illustrating an example of a configuration of a displacement detection device according to an embodiment of the present invention. Figs. 2(a) and 2(b) are a perspective view and a sectional view, respectively, illustrating the configuration of a magnetic sensor.

The displacement detection device 7 includes a magnetic sensor 1 that detects a variation in a magnetic flux density in detection directions Dₛₓ and D_{sz}, a magnet 2 that is connected to a spring 5 and a rod 3 and displaces in a displacement direction Dₛ parallel to the detection direction Dₛₓ, the rod 3 connected to an actuator 4, the actuator 4 that displaces the rod 3 in the negative direction in the x direction, the spring 5 that applies reaction force to the rod 3 with respect to the displacement of the actuator 4, and a housing 6 that holds the magnetic sensor 1, the actuator 4, and the spring 5.

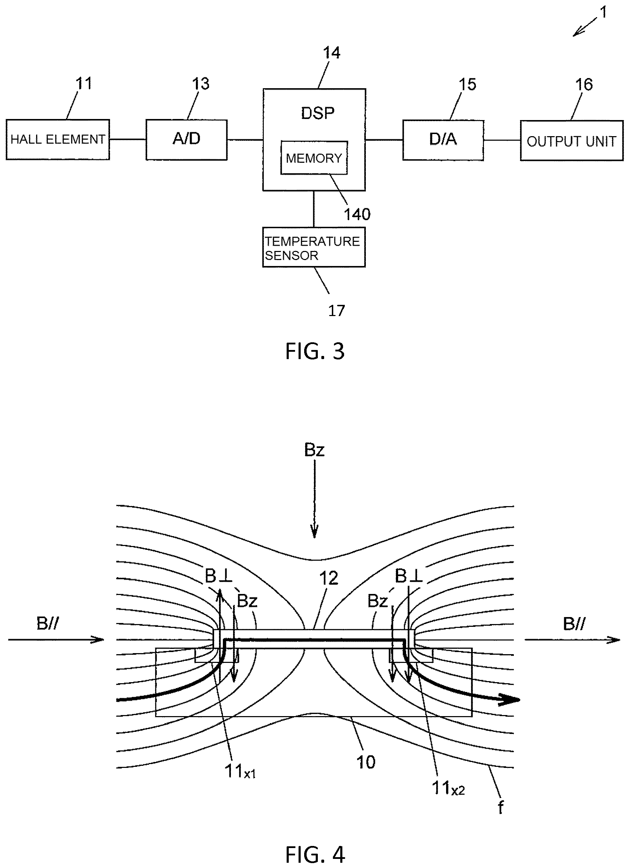

As illustrated in Figs. 2(a) and 2(b), the magnetic sensor 1 includes: a flat plate substrate 10 having a thickness in a z direction; Hall elements 11ₓ₁, 11ₓ₂, 11_{y1}, and 11_{y2} mounted on the substrate 10, having detection surfaces parallel to an xy plane, and having detection directions in the z direction as magnetic detection elements; a magnetic concentrator 12 that is mounted on the Hall elements 11ₓ₁, 11ₓ₂, 11_{y1}, and 11_{y2} such that a portion thereof is overlapped with the Hall elements and converts a magnetic flux in an x direction and a y direction into a magnetic flux in the z direction for causing the Hall elements 11ₓ₁, 11ₓ₂, 11_{y1}, and 11_{y2} to detect this magnetic flux; and a signal processor (DSP 14, Fig. 3) that processes signals output from the Hall elements 11ₓ₁, 11ₓ₂, 11_{y1}, and 11_{y2}, for example, and this magnetic sensor 1 is a Hall IC that detects magnetic flux densities in the x, y, and z directions.

The magnetic sensor 1 obtains the difference between the output from the Hall element 11ₓ₁ and the output from the Hall element 11ₓ₂ and the difference between the output from the Hall element 11_{y1} and the output from the Hall element 11_{y2} by using a magnetic position sensor, thereby being capable of obtaining outputs in proportion to the magnetic flux density in the x direction and the magnetic flux density in the y direction. The relationship between the magnetic flux density and the output will be described later. In addition, the space between the Hall elements 11ₓ₁ and 11ₓ₂ and the space between the Hall elements 11_{y1} and 11_{y2} are set as ds = 0.2 mm, and in a package mold section, the thickness in the z direction is 1.5 mm, the width in the x direction is 4.1 mm, and the height in the y direction is 3 mm. Permalloy can be used for the magnetic concentrator 12 of the magnetic sensor 1. Furthermore, the magnetic sensor 1 may not include Hall elements 11_{y1} and 11_{y2}.

Notably, other types of elements such as an MR element may be used for the magnetic sensor 1, so long as they have the detection direction in the x direction and the z direction, and a multi-axis magnetic detection IC having magnetic detection elements disposed in a plurality of axial directions may be used, so long as it includes the detection direction in the x direction and the z direction.

It is to be noted that the displacement amount in the stroke direction Dₛ is about a dozen millimeters (±10 mm), for example.

The magnet 2 may be a permanent magnet formed by using a material such as ferrite, samarium-cobalt, or neodymium.

The rod 3 is connected to a subject to be measured which is not illustrated. The subject to be measured is displaced by the actuator, and this displacement is detected by the magnetic sensor 1.

Fig. 3 is a block diagram illustrating one example of the configuration of the magnetic sensor 1.

The magnetic sensor 1 includes a Hall element 11 which collectively represents Hall elements 11ₓ₁, 11ₓ₂, 11_{y1}, and 11_{y2}, an A/D conversion unit 13 that converts an output from the Hall element 11 into a digital signal, a DSP 14 that serves as a signal processor for processing the digital signal, a D/A conversion unit 15 that converts the digital signal, which has been processed, into an analog signal, an output unit 16 that outputs the analog signal, and a temperature sensor 17 that detects ambient temperature of the magnetic sensor 1. The DSP 14 has a memory 140 that stores programs and information of a set value or the like for signal processing.

### Operation of displacement detection device according to embodiments of the present invention

Next, the operation of the embodiment will be described with reference to FIGS. 1 to 9.

Fig. 4 is a schematic diagram for describing the operation of the magnetic sensor 1 in the displacement detection device 7.

The magnetic flux passing through the magnetic sensor 1 is sensed by the Hall elements 11ₓ₁, 11ₓ₂, 11_{y1}, and 11_{y2}, and a signal proportional to the magnetic flux is output. Hereinafter, the description for the magnetic flux in the x direction, that is, the magnetic flux detected by the Hall elements 11ₓ₁ and 11ₓ₂, will similarly be applied for the y direction.

In a magnetic flux f, a parallel component B// is induced to the magnetic concentrator 12, so that the magnitude of the magnetic flux density is converted into a vertical component B⊥ which is proportional to the parallel component B//, and is detected by a pair of Hall elements 11ₓ₁ and 11ₓ₂. A vertical component B_{z} is also detected by a pair of Hall elements 11ₓ₁ and 11ₓ₂.

Specifically, the Hall element 11ₓ₁ on the left side in the drawing detects "B⊥- B_{z}", while the Hall element 11ₓ₂ on the right side in the drawing detects "-B1- B_{z}". In the Y direction, the Hall elements 11_{y1} and 11_{y2} similarly perform detection.

Therefore, if the difference between the output from the Hall element 11ₓ₁ and the output from the Hall element 11ₓ₂ is calculated, 2B⊥ is obtained, and if the sum of them is calculated, -2Bz is obtained. In the description below, the magnetic sensor 1 detects displacement of the magnet 2 based on the Bx⊥ and Bz.

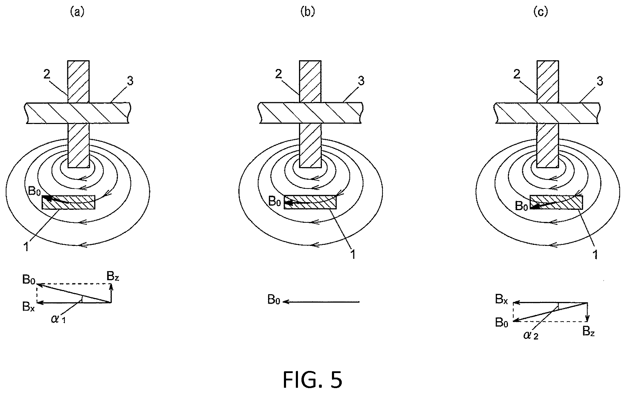

Figs. 5(a) to 5(c) are schematic diagrams for describing the operation of the displacement detection device 7 according to embodiments of the present invention.

When the rod 3 is displaced in the positive direction in the x direction by the actuator 4, the magnet 2 is similarly displaced, and as illustrated in Fig. 5(a), the magnetic flux densities Bₓ and B_{z} in the detection directions Dₛₓ and D_{sz} in the magnetic flux density B of the magnetic sensor 1 penetrating the Hall element respectively assume a negative value from the equation of Bₓ = B₀ · cosα₁ < 0 and a positive value from the equation of B_{z} = B₀ · sinα₁ > 0, wherein the angle made by the x direction and the magnetic flux is defined as α₁.

Next, when the rod 3 is displaced in the negative direction in the x direction from the state illustrated in Fig. 5(a), the magnetic sensor 1 and the magnet 2 are closest to each other on a certain point as illustrated in Fig. 5(b). In this state, the magnetic flux densities in the detection directions Dₛₓ and D_{sz} in the magnetic flux density B of the magnetic sensor 1 penetrating the Hall element satisfy the equations of Bₓ = B₀ · cos0° = B₀ and B_{z} = B₀ · sin0° = 0.

Then, when the rod 3 is displaced further in the negative direction in the x direction from the state illustrated in Fig. 5(b), the magnetic flux densities Bₓ and B_{z} in the detection directions Dₛₓ and D_{sz} in the magnetic flux density B of the magnetic sensor 1 penetrating the Hall element respectively assume a negative value from the equation of Bₓ = B₀ · cosα₂ < 0 and a negative value from the equation of B_{z} = B₀· sinα₂ < 0, wherein the angle made by the x direction and the magnetic flux is defined as α₂ as illustrated in Fig. 5(c).

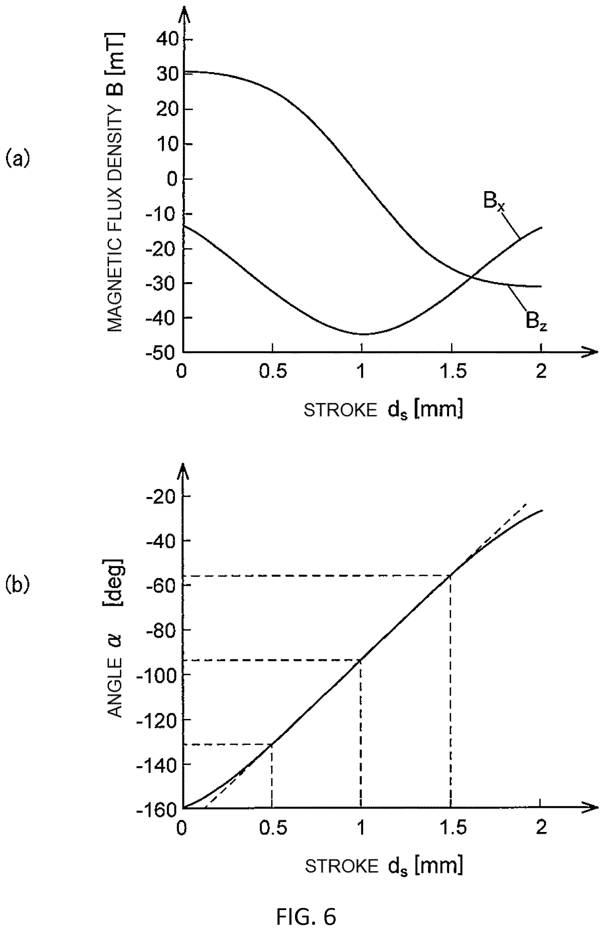

The relationship between the displacement of the magnet 2 and the magnetic flux density detected by the magnetic sensor 1 is indicated as in Fig. 6(a) described below. In addition, the DSP 14 in the magnetic sensor 1 calculates α = Arctan(Bₓ/B_{z}) by using the above-mentioned Bₓ and B_{z}. The relationship between the α and the displacement of the magnet 2 is indicated as in Fig. 6(b).

Figs. 6(a) and 6(b) are a graph showing the relationship between the displacement of the magnet 2 and a magnetic flux detected by the magnetic sensor 1, and a graph showing the relationship between the displacement of the magnet 2 and an output from the magnetic sensor 1.

When the stroke in the state (state in Fig. 5(c)) in which the rod 3 is not moved by the actuator 4 is set as 0.5 mm, the stroke is increased as the rod 3 is pushed by the actuator 4. The relationship between the displacement of the magnet 2 and the magnetic flux density in two directions (Dₛₓ, D_{sz}) detected by the magnetic sensor 1 is as shown in Fig. 6(a). In addition, as illustrated in Fig. 6(b), the relationship between the displacement of the magnet 2 and the α calculated by the DSP 14 in the magnetic sensor 1 is such that the magnetic flux density is increased with the increase in the stroke in the positive direction, and linearity (dynamic range is 80 deg) is ensured within the range from 0.5 to 1.5 mm of the stroke.

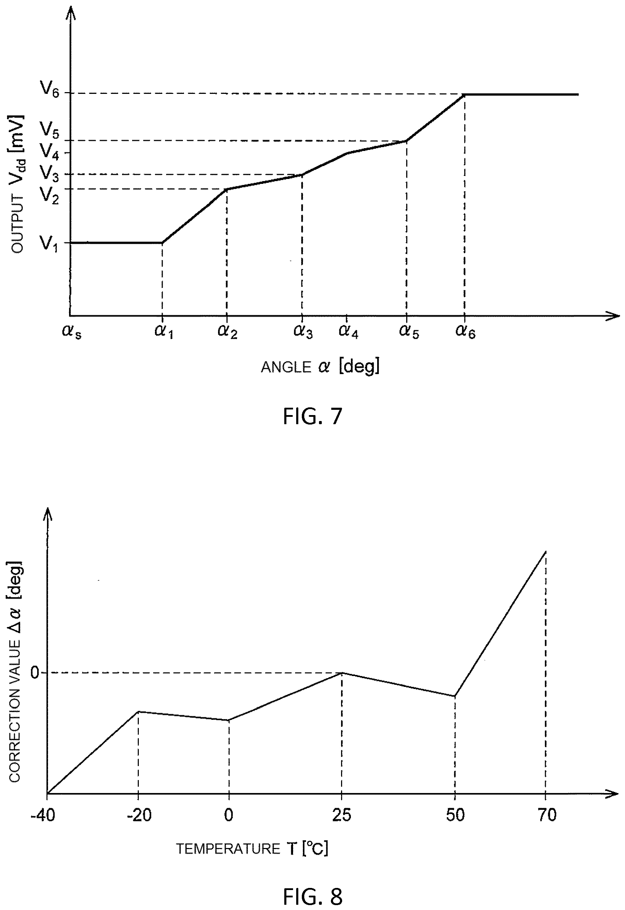

In addition, the DSP 14 in the magnetic sensor 1 which generally outputs a voltage V_{dd} proportional to the calculated α from the output unit 16 as an output value may output a voltage V_{dd}, which is obtained by converting the calculated α as illustrated in Fig. 7 described below based on a condition prepared in the memory 140 in advance, as an output value.

Fig. 7 is a graph showing the relationship between the voltage V_{dd} converted by the DSP 14 in the magnetic sensor 1 and the angle α.

The voltage V_{dd} output from the output unit 16 is determined such that a user designates the range αₛ - α₁, α₁ - α₂, α₂ - α₃, α₃ - α₄, α₄ - α₅, α₅ - α₆, and α₆- of the angle α, and the slope of each range is designated. Due to this conversion, the displacement detection device can be adapted to the case in which the displacement of the rod 3 and the amount of change of the target to be measured connected to the rod 3 are not proportional to each other, such as the relationship between a fuel level in a fuel tank and a remaining amount of fuel.

Next, the DSP 14 in the magnetic sensor 1 determines a correction value Δα corresponding to a temperature T input from the temperature sensor 17 on the basis of the condition prepared in advance in the memory 140 as illustrated in Fig. 8.

Fig. 8 is a graph showing the relationship between the correction value Δα and the temperature T.

The correction value Δα is determined such that the correction amount at room temperature (T = 25°C) is defined as zero and the slope of each temperature range is designated. This is determined in consideration of the change in the relative position between the magnet 2 and the magnetic sensor 1 caused by the change in the natural length or elastic coefficient of the spring 5, the initial position and displacement of the rod 3 and the actuator 4, and the position of the Hall element 11 in the magnetic sensor 1, at the temperature of the environment where the displacement detection device 7 is placed.

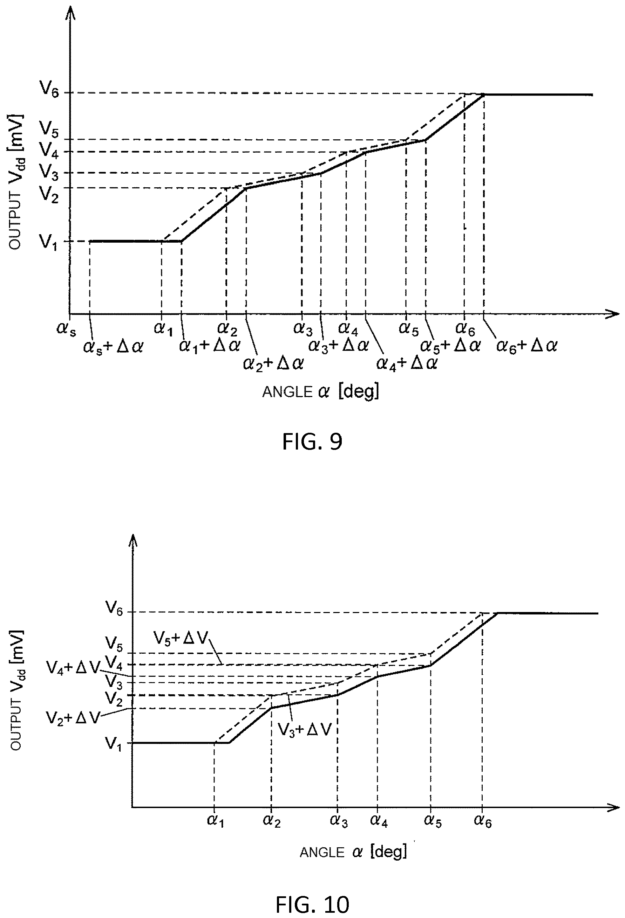

Next, the DSP 14 in the magnetic sensor 1 adds Δα to the calculated α, and converts the resultant into the voltage V_{dd} as illustrated in Fig. 9 described below.

Fig. 9 is a graph showing the relationship between the voltage V_{dd} converted by the DSP 14 in the magnetic sensor 1 and the angle α.

As illustrated in Fig. 9, the relationship between the angle α and the voltage V_{dd} corresponds to the relationship in which the graph illustrated in Fig. 7 is shifted in the horizontal direction by Δα. Specifically, the obtained relationship is not the one in which the slope is converted with respect to the entire range of α, but the one in which αₛ as a starting point is shifted to αₛ + Δα.

### Effect of embodiments of the present invention

According to the embodiment described above, the correction value Δα dependent on temperature is added to the angle α calculated in the DSP 14, whereby the output value of the magnetic sensor 1 can be corrected even when the relative position between the magnet 2 which is the magnetic member and the Hall elements 11ₓ₁, 11ₓ₂, 11_{y1}, and 11_{y2} of the magnetic sensor 1 is changed dependent on temperature.

In addition, the linearity of the signal output from the Hall element with respect to the magnetic flux density is reduced as the temperature is farther from room temperature, but since the ratio of Bₓ and B_{z} is used for the calculation of α, the reduction of the linearity can be offset.

### Other Embodiments of the present invention

It is to be noted that the present invention is not limited to the embodiment described above, and various modifications are possible without departing from the spirit of the present invention.

While the embodiment described above indicates the case in which the magnet 2 serving as the magnetic member is displaced along with the rod 3, it may be configured such that a magnet is fixed below the magnetic sensor 1, a soft magnetic body that is displaced along with the rod 3 is prepared as the magnetic member in place of the magnet 2, and a variation in the magnetic flux density varying due to the displacement of the soft magnetic body is detected by the magnetic sensor 1. In addition, the shape of the magnet and the magnetization direction are not particularly limited.

Further, the magnetic sensor 1 is not limited to have the magnetic detection direction in the x direction and z direction, and may have magnetic detection direction in any directions, so long as it detects an angle of a magnetic field. In addition, the calculated angle of the magnetic field is not limited to α, and can appropriately be changed according to the detection direction.

Furthermore, while the correction value Δα dependent on temperature is added to α in the DSP 14 in the embodiment described above, a correction value ΔV dependent on temperature may be added at the output unit 16 as illustrated in Fig. 10 described below.

Fig. 10 is a graph showing the relationship between the voltage V_{dd} converted by the output unit 16 in the magnetic sensor 1 and the angle α.

As illustrated in Fig. 10, the relationship between the angle α and the voltage V_{dd} corresponds to the relationship in which the graph illustrated in Fig. 7 is shifted in the vertical direction by ΔV as compared to the case before ΔV is added. The voltages V₁ and V₆ are not shifted by ΔV. This is because, after the voltages V₁ and V₆ are actually shifted by ΔV, the resultant voltages are limited to the minimum voltage V₁ and the maximum voltage V₆ which are output by clamp setting mounted thereafter. Note that the example in Fig. 9 shows that the minimum voltage V₁ and the maximum voltage V₆ are limited by clamping.

## Claims

1. A displacement detection device (7) comprising: a magnetic detection element (1) for outputting a signal according to a detected magnetic flux density and for detecting a magnetic flux density that varies according to displacement of a magnetic member (2); and
a signal processor (14) for processing a signal output from the magnetic detection element (1) using a predetermined calculation method and for calculating an output value proportional to the displacement of the magnetic member (2), the signal processor (14) being adapted for correcting the output value by using a correction value determined based on a relationship between the relative position between the magnetic member (2) and the magnetic detection element (1) and temperature.

2. A displacement detection device (7) comprising: a magnetic detection element (1) for outputting a signal according to a detected magnetic flux density and for detecting a magnetic flux density that varies according to displacement of a magnetic member (2);
a signal processor (14) for processing a signal output from the magnetic detection element (1) using a predetermined calculation method and for calculating an output value proportional to the displacement of the magnetic member (2); and
an output unit (16) for outputting an output signal by correcting the output value by using a correction value determined based on a relationship between the relative position between the magnetic member and the magnetic detection element and temperature.

3. The displacement detection device (7) according to any of claims 1 or 2, wherein the signal processor (14) is adapted for using, for the predetermined calculation method, a ratio between a signal output from the magnetic detection element with respect to one detection direction and a signal output from the magnetic detection element with respect to the other detection direction.
